# EUROPEAN PATENT APPLICATION

(11) **EP 0 930 321 A1**
(43) Date of publication of application: **21.07.1999**
(21) Application number: 98100880.8
(22) Date of filing: 20.01.1998
(51) Int. Cl.: C08F 220/00, C08F 290/06, C08F 220/28, C04B 24/26

(54) **Intrinsically low foaming copolymers and their use as cement additives**

(71) Applicant: Dow Europe S.A., 8810 Horgen (CH); Dow Deutschland Inc., 21683 Stade (DE)
(72) Inventor: Eiffler, Jürgen, Dr., 21682 Stade (DE); Fröhlich, Christoph, 8835 Feusisberg (CH)
(74) Representative: Patentanwälte Sternagel & Fleischer

(57) **Abstract**

The present invention refers to a copolymer comprising
a) structural units derived from ethylenically unsaturated hydrocarbons;
b) structural units derived from ethylenically unsaturated monomers selected from mono-carboxylic acids as well as salts and amids thereof, dicarboxylic acids as well as salts, amids and half-amids thereof and cyclic anhydrides and imids of dicarboxylic acids and mixtures thereof; and
c) structural units derived from monomers selected from esters of ethylenically unsaturated monocarboxylic acids, half-esters of ethylenically unsaturated dicarboxylic acids, allylethers and vinylethers and mixtures thereof having an substituent R linked to the oxygen atom of either the ester groups or the ether groups that is selected from:
   (i) polyalkyleneoxide groups corresponding to the formula 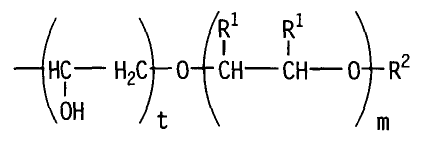 wherein R¹ is independently at each occurrence selected from hydrogen and C₁-C₄ alkyl, R² is C₁-C₄₄ hydrocarbyl, t is 0 or 1 and m is an integer in the range of 5 - 200, with the proviso that if R² is C₁-C₅ alkyl the polyalkyleneoxide group does not contain more than 50 wt. % ethyleneoxide moieties based on the weight of the polyalkyleneoxide group; and
   (ii) groups corresponding to the formula 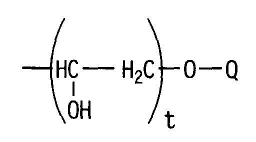 wherein t is 0 or 1 and Q is a polysiloxane residue; and
   whereby the molar ratio of units b) to units c) in the copolymer is in the range of 1000:1 to 5:1, to the use of these copolymers as pasticizer in a cementitious composition and to cementitious compositions comprising such copolymers.

## Description

The invention relates to novel copolymers containing structural units derived from α,β-unsaturated mono or dicarboxylic acids or derivatives thereof whereby a considerably small fraction of these structural units bear hydrophobic residues. These polymers are especially useful as additives in cementitious compositions to enhance their flowability and processability. According to a second aspect the present invention refers to cementitious compositions comprising the copolymer of the present invention.

Surface-active dispersions are commonly used as additives in cementitious mixtures, e.g. in mortar or concrete mixtures in order to enhance their flowability and processability. Well known dispersions in the art are lignosulfonates , naphthalene- or formaldehyde-condensates. However, lignosulfonates show a non-satisfactory performance and naphthalene-formaldehyde-condensates have come under environmental pressure since they contain residual toxic amounts of free formaldehyde.

Therefore synthetic water soluble acrylate based superplasticizers have been introduced into the market. Among other they are in particular produced from styrene/(meth)acrylic acid monomers. Typical products and processes for preparation of the copolymers are disclosed in US-A 5,138,004, JP-A 62-187152 ("Cement Additives", Production and use of styrene/(meth)acrylic acid and styrene/maleic-anhydride-copolymers), GB-A-2 221 673 (Use of olefin/α,β-unsaturated dicarboxylic acid copolymers), and JP-A 84-62137 ("Low molecular weight styrene/maleic-anhydride-copolymers").

These polymers have, however, in common that they are of very hydrophilic nature due to their higher level of carboxylic acid groups in the polymer backbone. As a consequence these polymers are very surface-active and promote an air entrainment into the cement/mortar mixtures. Usually if no defoamers are added the mortar air content can add up to 15 % or more. The high air level negatively influences other properties of the hardened cement, such as its mechanical strength. Additionally defoamers which are added to reduce the air content separate from the aqueous polymer solution within a very short time usually within a couple of days only.

Therefore and because of other reasons, i.e. to enhance the performance of the synthetic polymers the copolymers have been modified.

EP-A-736553 discloses a copolymer composed of at least 3 different structural units a), b) and c). Structural unit a) is derived from an unsaturated dicarboxylic acid derivative or cyclic anhydrides and imides of these dicarboxylic acids. Preferred units are derived from maleic acid derivatives. The structural unit b) is derived from an oxyalkyleneglycol-alkenylether, preferably polyethyleneoxide-vinylether, and finally structural unit c) is derived from a monomer selected from a wide range of ethylenically unsaturated monomers. However, in general, oxyalkyleneglycol ethers are difficult to be produced and they are obtained in lower yields. Therefore these polymers are rather expensive. Furthermore they are susceptible to hydrolysis in acidic environments that may occur during preparation of the polymers

From DE-A-37 28 786 a copolymer comprising styrenic units and units derived from maleic anhydride esterified with a polyalkylene glycol is known whereby only esterification with polyethylene glycols is explicitly disclosed. The used polyethylene glycols still render the copolymer hydrophilic. In DE-OS-37 28 786 it is disclosed that these copolymers can be used due to their surface-activity as emulsifiers to improve dispersibility of cement in water. But the high surface-activity also leads to an undesired high foam level.

In EP-A-306 449 copolymers of styrene and maleic acid half-esters are disclosed. These copolymers are prepared by copolymerization of maleic anhydride and styrene, followed by esterification of the maleic anhydride units with polyalkylene glycols and subsequent neutralization with sodium hydroxide solution. Due to steric hindrance a minor portion of the maleic anhydride units remain unreacted. But according to the teaching of this references it is preferred to esterify as many malein anhydride units as possible although a 100 % conversion as envisaged by the teaching of this reference is for practical reasons not possible. The preferred polyalkylene glycol is polyethylene glycol. These copolymers are suitable as emulsifiers and increase the flowability of cementitious compositions. It is also mentioned that these copolymers show a reduced level of air entrainment in comparison to comparable copolymers with a lower molecular weight. But no data are disclosed to enable verification of this statement.

In DE-A-41 42 388 copolymers composed of random units are represented by the following formula 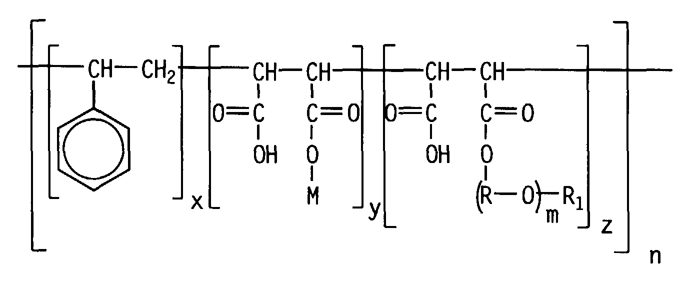
wherein M is hydrogen or the residue of a hydrophobic polyalkylene glycol, e.g. polypropylene glycol or of a polysiloxane,
R is a C₂-C₆-alkylene residue,
R₁ is a C₁-C₂₀-alkyl, C₅-C₉-cycloalkyl or a phenyl group,
x, y and z are integers of 1 to 100,
m is an integer of 1 to 100, and
n is an integer of 10 to 100,
   whereby the ratio of x:(y+z) is from 10:1 to 1:10,
   the ratio of y:z is from 1:5 to 1:100, and
m+n equals 15 to 100.

In a preferred embodiment R is a C₂-C₃-alkylene group. These copolymers are useful as emulsifiers and plasticizers in cementitious compositions. It is also described that these copolymers do not have the same air entraining properties as comparable copolymers without providing any data.

DE-A-44 45 569 discloses a similar copolymer for the same purpose wherein the styrene moiety is substituted by a moiety derived from an ethylenically unsaturated monomer selected from a wide range of monomers.

In the preferred embodiments of both German applications R is preferably ethylene, resulting in a hydrophilic polymer still showing high foam levels.

Additionally the copolymers as disclosed in any of the cited references require a considerably large amount of expensive raw material, like polyalkylene glycols.

Thus it is the object of the present invention to provide a compound that is suitable as additive in cementitious compositions to increase their flowability thereby reducing the level of air entrained into the cementitious composition.

According to a further object of the present invention these compounds shall be inexpensive without compromising their ability to increase the flowability of cementitious compositions and to reduce the foam level

This objects have been attained by a copolymer comprising:
a) structural units derived from ethylenically unsaturated hydrocarbons;
b) structural units derived from ethylenically unsaturated monomers selected from monocarboxylic acids as well as salts and amids thereof, dicarboxylic acids as well as salts, amids and half-amids thereof and cyclic anhydrides and imids of dicarboxylic acids and mixtures thereof; and
c) structural units derived from monomers selected from esters of ethylenically unsaturated monocarboxylic acids, half-esters of ethylenically unsaturated dicarboxylic acids, allylethers and vinylethers and mixtures thereof having an substituent R linked to the oxygen atom of either the ester groups or the ether groups that is selected from:
   (i) polyalkyleneoxide groups corresponding to the formula 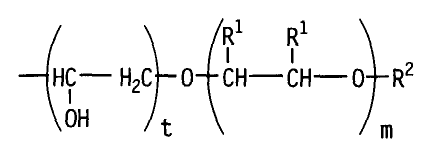 wherein R¹ is independently at each occurrence selected from hydrogen and C₁-C₄ alkyl, R² is C₁-C₄₄ hydrocarbyl, t is 0 or 1 and m is an integer in the range of 5 - 200, with the proviso that if R² is C₁-C₅ alkyl the polyalkyleneoxide group does not contain more than 50 wt. % ethyleneoxide moieties based on the weight of the polyalkyleneoxide group; and
   (ii) groups corresponding to the formula; 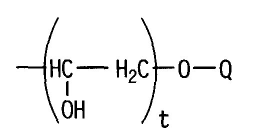 wherein t is 0 or 1 and Q is a polysiloxane residue.
   whereby the molar ratio of units b) to units c) in the copolymer is in the range of 1000:1 to 5:1.

The polymers of the present invention combine high plasticization of the cementitious composition with a low air entrainment due to the incorporation of certain specified hydrophobic residues. However, it was very surprising that such a high efficiency in reducing the foam level can be achieved at such a low level of incorporation of hydrophobic residues. Thus the copolymers of the present invention are not only highly effective but they can also be produced at considerably lower cost in comparison to the cited prior art products.

The copolymer of the present invention is composed of at least three different types of structural units as defined above.

The structural units a) preferably correspond to the formula I 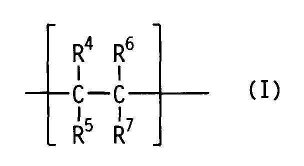
wherein R⁴ is selected from C₁-C₈ alkyl and substituted and non-substituted aryl and R⁵, R⁶ and R⁷ are independently at each occurrence selected from hydrogen and C₁-C₄ alkyl.

The selection of specific olefinic starting materials for the production of the copolymer is not critical. But for reasons of ease of production and availability of starting material styrene and diisobutylene are the preferred monomers used to provide for the structural units corresponding to formula (I). The most preferred olefinic monomer used in the preparation of the copolymer of the present invention is styrene.

The structural units b) of the copolymers of the present invention preferably correspond to the formulae 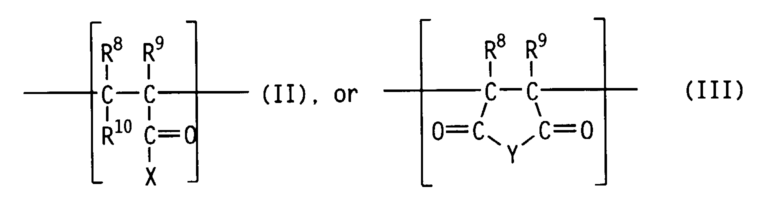
wherein R⁸ and R⁹ are independently at each occurrence selected from hydrogen and C₁-C₄ alkyl;
R¹⁰ is selected from hydrogen and C(O)X;
X is independently at each occurrence selected from OA and NR¹¹₂,
   whereby A is selected from hydrogen, ammonium, alkyl ammonium, alkanol ammonium and 1/n Mⁿ⁺, whereby M is a metal having the valence n, and R¹¹ is selected from hydrogen, alkyl and aryl;
and Y is selected from O and NR¹¹, whereby R¹¹ is defined as above;

The structural units b) of the copolymer of the present invention as defined above are derived from specific unsaturated mono-carboxylic acids and derivatives thereof. These derivatives are amides and salts of unsaturated mono-carboxylic acids. Alternatively, the structural units b) are derived from unsaturated dicarboxylic acids, salts, amides and half-amides thereof, as well as from cyclic anhydrides and imides of dicarboxylic acids.

As is well known to the person skilled in the art the structural units b) may be incorporated into the copolymer of the present invention either by copolymerizing of monomers being already appropriately modified or by copolymerizing the free monocarboxylic acid, the free dicarboxylic acid or the anhydride of the dicarboxylic acid, followed by subsequent reactions of the polymer to appropriately modify the structural units b) in the polymer.

The first alternative is especially preferred for introduction of amides of the monocarboxylic acids and the amides and half-amides and cyclic imides of the dicarboxylic acids. The second alternative is especially preferred for the introduction of the salts of mono or dicarboxylic acids. In that case the free mono or dicarboxylic acids or the dicarboxylic anhydride is copolymerized and thereafter the resulting polymer is neutralized. The preferred countercations of these anionic units are the cations of the alkaline and earth alkaline metals as well as Fe³⁺ and Al³⁺ and ammonium, alkyl ammonium and alkanol ammonium cations.

Preferred units for the structural unit b) are derived from acrylic acid, methacrylic acid, maleic acid, and the salts thereof, as well as from maleic anhydride. Especially preferred are structural units derived from maleic acid and salt thereof as well as from maleic anhydride whereby completely neutralized units derived from maleic acid are most preferred.

The preferred structural units c) of the copolymer of the present invention correspond to the formulae 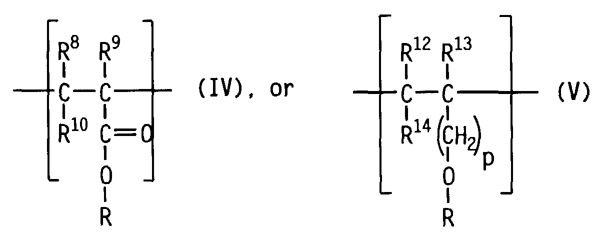
whereby R, R⁸, R⁹ and R¹⁰ are defined as above, and
R¹², R¹³ and R¹⁴ are independently at each occurrence selected from hydrogen and C₁-C₄ alkyl and p is 0 or 1.

Structural units c) of the copolymer of the present invention are preferably derived from esters of unsaturated monocarboxylic acids or half-esters of unsaturated dicarboxylic acids, or from vinylethers, whereby it is crucial to select a specific substituent R pending on the oxygen atom of the ether or ester group. The substituent R is selected from:
(i) polyalkyleneoxide groups corresponding to the formula 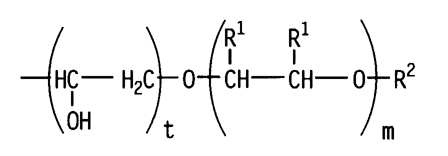 wherein R¹ is independently at each occurrence selected from hydrogen and C₁-C₄ alkyl, R² is C₁-C₄₄ hydrocarbyl, t is 0 or 1 and m is an integer in the range of 5 - 200, with the proviso that if R² is C₁-C₅ alkyl the polyalkyleneoxide group does not contain more than 50 wt. % ethyleneoxide moieties based on the weight of the polyalkyleneoxide group; and
(ii) groups corresponding to the formula; 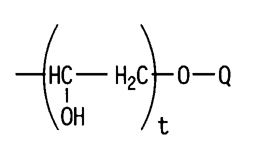 wherein t is 0 or 1 and Q is a polysiloxane residue.

While structural units c) derived from vinylether monomers are suitable for the present invention they have some disadvantages. For example vinylether components as defined above tend to be susceptible to hydrolyzation in acidic environments which may occur especially in the copolymerization used for preparing the copolymers of the present invention, especially if unsaturated mono or dicarboxylic acids are used for the polymerization. Thus for ease of production it is preferred that the copolymer of the present invention is substantially free of units derived from vinyl ether monomers.

Structural units c) derived from allylethers are more preferred due to the higher stability of the allylethers in acidic environments and to the better control of molecular weight of the copolymers of the present invention, since the allyl radical can act as chain transfer agent.

According to the most preferred embodiment of the present invention the structural units c) are derived from monomers selected from 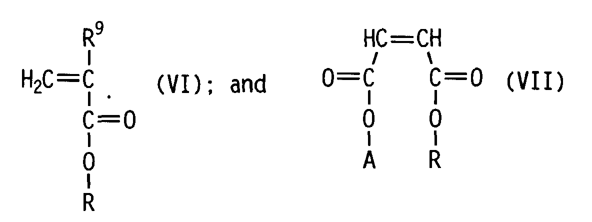
wherein R⁹ is hydrogen or methyl and A and R are as defined above. Particularly preferred are units derived from half-esters of maleic acid.

It is especially crucial for the present invention to select appropriate substituents R for the structural units c). By introduction of these substituents the comonomers the structural units b) are derived from are modified to render them more hydrophobic, thereby reducing its surface-active properties and thus suppresses its level of foaming. These substituents R are desirably selected from
(i) ethyleneoxide/propylenenoxide copolymer residues bearing a terminal C₁-C₂₄ alkyl group and containing no more than 50 wt% ethyleneoxid units based on the weight of R,
(ii) polyethyleneoxide residues bearing a terminal C₆-C₃₅ alkyl moiety containing on an average not more than 10 ethyleneoxide units,
(iii) poly(propyleneoxide) residues bearing a terminal C₁-C₂₄ alkyl group,
(iv) poly(butyleneoxide) residues bearing a terminal C₁-C₂₄ alkyl group,
(v). butyleneoxide/propyleneoxide copolymer residues bearing a terminal C₁-C₂₄ alkyl group,
(vi) ethyleneoxide/butyleneoxide copolymer residues bearing a terminal C₁-C₂₄ alkyl group and containing no more than 50 wt% ethyleneoxid units based on the weight of R,
(vii) ethyleneoxide/propyleneoxid/butyleneoxide terpolymer residues bearing a terminal C₁-C₂₄ alkyl group and containing no more than 50 wt% ethyleneoxid units based on the weight of R, and
(viii) polymer residues corresponding to the formula 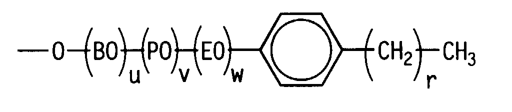 wherein EO, PO, BO represent randomly arranged ethyleneoxide, propyleneoxide and butyleneoxide units respectively, u, v, and w are integers of 0 to X, with the proviso, that no more than 50 wt% ethyleneoxide units based on the weight of R are present and r is 0-35.

The polysiloxane residue Q in the formula of substituent R(ii) corresponds preferably to the formula 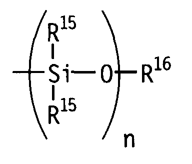
wherein R¹⁵ is independently at each occurrence selected from C₁-C₆ alkyl, preferably methyl, R¹⁶ is selected from R¹⁵ and SiR¹⁵₃ and n is an integer between 10 and 100.

According to a preferred embodiment of the present invention if the structural units b) are derived from (meth)acrylic esters t in the formulae (i) and (ii) of substituent R as defined above is one. These monomers can be prepared by reacting glycidyl(meth)acrylate with an appropriate hydroxyl functional polyalkyleneoxide or hydroxyl functional polysiloxane. In case of structural units b) derived from half-esters of ethylenically unsaturated dicarboxylic esters, allylethers and vinylethers t in the formulae (i) and (ii) of substituent R as defined above is preferably zero.

Preferably the copolymers of the present invention are modified by incorporating long-chain polyalkyleneoxides which are known to be effective as defoamers. These compounds are preferably made from propyleneoxide or butyleneoxide by initiation with an alcohol, such as methanol, ethanol, butanol or a higher fattyalcohol or mixtures therefrom. Preferred are more hydrophobic alcohols such as butanol or higher fattyalcohols (C₆-C₂₄). Ethyleneoxides can also be used as a comonomer with propyleneoxide and/or butyleneoxide, however, its level is not higher than 50 wt.-% in case initiation o the above described reaction is made with a lower alcohol (C₁-C₅) since the polyalkyleneoxides should not be too hydrophilic. Examples of the polyalkyleneoxides used to modify the copolymers of the present invention are:
Synalox 25-50B, Synalox 25-220B, Synalox 25-300B, Synalox 50-15B, Synalox 50-30B, Synalox 50-50B, Synalox 50-100B, Synalox 50-155B, Synalox 50-300B, Terralox OH28, Terralox OH32 and Terralox OA32. These are all ethyleneoxide/propyleneoxide copolymers with a maximum content of ethyleneoxide units of 50 wt.-% based on the weight of the polyalkyleneoxide available from Dow Chemical Company.

Suitable propyleneoxide polymers for modifying the copolymer of the present invention are the commercial products Synalox 100-20B, Synalox 100-30B, Synalox 100-50B, Synalox 100-85B, Synalox 100-120B, Synalox 100-150B, DowFine 1000 and DF-141, all commercial products obtainable from Dow Chemical Company.

Examples of butyleneoxide polymers suitable to modify the copolymer of the present invention are the commercial products Synalox OA15, Synalox OA25, Synalox OA60, Synalox OA90, and Synalox OA185 available from Dow Chemical Company.

Other suitable polyalkyleneoxids comprise polyethylenoxids if the initiator is exclusively a higher fatty alcohol (C₆ and higher) and if the polyethyleneoxid chain contains on average not more than 10 ethyleneoxide units. Such compounds are available from Dow Chemical Company under the tradename Terralox WA-32 and WA-41.

Other preferred compounds that can be used to modify the copolymer of the present invention are derivatives of polyalkyleneoxide polymers corresponding to the formula 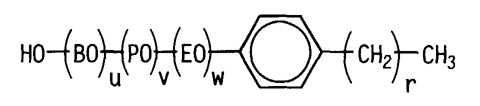
wherein EO, PO, BO represent randomly arranged ethyleneoxide, propyleneoxide and butyleneoxide units respectively, u, v, and w are integers of 0 to X, with the proviso, that no more than 50 wt% ethyleneoxide units based on the weight of R are present and r is 0-35. These compounds are available from Dow Chemical Company under the tradename Dowfax, e.g. Dowfax D141.

The substituents R pending on the structural units c) of the present invention have preferably a weight average molecular weight in the range of 100-10,000, preferably in the range of 500-5,000. Another crucial aspect of the present invention is the molar ratio of structural units b) to structural units c) in the copolymer of the present invention. The structural units b) impart hydrophilic properties to the copolymer of the present invention, thus rendering the copolymer water-soluble or at least water-dispersible. As already mentioned the structural units c) impart hydrophobic properties to the copolymer, thereby reducing surface-activity of the copolymer and consequently the amount of air entrained into a cementitious composition comprising the copolymer as additive.

Surprisingly the inventors of the present invention discovered that a relatively low amount of structural units c) in comparison to structural units b) is sufficient to solve the above stated object of the present invention. Thus according to the present invention the molar ratio of structural units b) to structural units c) is in the range of 1,000:1 to 5:1, preferably in the range of 500:1 to 10:1, and more preferred in the range of 150:1 to 20:1. Thus a comparatively small amount of for example polyalkyleneoxide chains incorporated into the copolymer is sufficient to impart the desired properties to the copolymer of the present invention. Due to this comparatively small amount the production costs of the copolymers of the present invention are considerably lower as those of the products of the cited prior art.

The molar ratio of units a) to the sum of units b) and c) in the copolymer of the present invention is less critical and more or less dictated by practical aspects like ease of production of the copolymers. Preferably this ratio is within he range of 1:10 to 10:1.

The copolymers of the present invention can be prepared by copolymerization of monomers that provide for the structural units a), b) and c) as defined above utilizing polymerization methods that are well known to the person skilled in the art. Thus it is preferred to introduce structural units c) as defined above into the copolymer of the present invention by copolymerizing esters of ethylenically unsaturated monocarbonic acids, half-esters of ethylenically unsaturated dicarboxylic acids, allylethers or vinylethers already bearing the substituent R as defined above with other monomers providing for the units a) and b) in the appropriate relative amounts. By subsequent neutralization with caustic the carboxylic groups or the anhydride groups in the copolymer may be converted into the salt form if desired.

In case the half-ester of a dicarboxylic acid e.g. maleic acid is utilized to provide for structural units c) the half-ester formation can be achieved by the reaction of maleic anhydride with an alcohol providing for the substituent R as defined above, e.g. a hydrophobic polyalkyleneoxide by dissolving/dispersing maleic anhydride in the polyalkyleneoxide. The reaction temperature is in the range of 50°C to 200°C, preferably in the range of 70°C to 170°C and most preferably 90°C to 150°C. The reaction time depends on the temperatures and is generally between 0.5 to 8 hours to completion of the reaction.

If maleic acid is selected as an unsaturated carboxylic acid monomer, it is preferably used and prepared "in situ" by hydrolyzing maleic anhydride. This can occur by adding water in appropriate ratios to the polyalkyleneoxide. However the simultaneous half-ester formation and hydrolysis of maleic anhydride is less preferred.

Preferred is the conversion in two steps by preparing first the half-ester by using maleic anhydride in excess (molar ratio of maleic anhydride to polyalkyleneoxide of at least 1:1 to 100:1). In a subsequent step additional maleic anhydride is added to provide for the appropriate ratio of structural units b) to units c) in the final copolymer. Thereafter maleic acid is hydrolyzed to the desired extent by adding the appropriate amount of water. Water may be present in excess and can be used together with isopropanol.

Still another method is to perform half-ester formation and hydrolysis of maleic anhydride separately and to combine both solutions prior to the polymerization with the olefinic monomer, e.g. styrene. Polymerization is carried out according to known procedures, see for instance US-A 5,138,004.

Preferred is however a method, where styrene and the initiator is continuously added in a concentrated solution of maleic acid containing the half-ester as described above. Preferably if acrlyic acid or methacrylic acid is used it is added together or separately with the styrene stream and the initiator stream into the reaction solution containing the lower alcohol/water mixture and the half-ester. The half-ester can however also be added as a forth, separate component to the reaction mixture or dissolved in the styrene or (meth)acrlyic acid stream. The continuous feed of the monomer streams into the reaction mixture guaranties low monomer concentrations and therefore, low molecular weight. Chain transfer agents such as dodecylmercaptan, hypophosphites, phosphorous acid or allylsulfonate can be used to control the molecular weight. Preferred initiators are peroxo-compounds such as peroxodisulfates or hydrogenperoxide which can be employed in combination with a peroxide decomposer such as ferric salts or a sulfite or an amine in order to accelerate its decomposition. But instead of peroxides, also organic initiators such as azodiisobutyronitrile and the like can be used. A particular feature of the process described above is that the solvent, lower alcohol like isopropanol can be recycled and reused for subsequent reactions.

The same is valid if an (meth)acrylate of an hydroxy-functional compound providing for the hydrophobic substituent R of the present invention is used instead of the half-ester. The (meth)acrylates are produced in a separate, independent step e.g. by esterification of (meth)acrylic acid or reaction of (meth)acryoylchloride with the appropriate hydroxy-functional compound.

If vinylethers or allylethers bearing the hydrophobic substituent of the present invention are used, the unsaturated carboxylic acid such as maleic acid is neutralized and polymerized under neutral pH conditions or slightly alkaline conditions in its salt-form with styrene, because the vinylethers are unstable under acidic conditions.

Alternatively, but less preferred, the substituents R may be introduced into the copolymer after copolymerization by subsequent esterification of carboxylic acid groups, anhydride groups or carboxylate groups in the copolymer with an appropriate amount of hydroxyl-functional compounds of the substituents R as defined above to provide for the claimed ratio of structural units b) to structural units c). For example as disclosed in JP-A 84-62137 styrene can be polymerized with maleic anhydride, for instance using methylisobutylketone or o-xylol as solvent and the final copolymer can be converted with the hydroxyl-functional compounds providing for the hydrophobic substituent R. The half-ester formation and the hydrolysis is preferably carried out in two independent steps.

Following this route, the polymer usually contains residual, non-reacted maleic anhydride groups.

The copolymers of the present invention can be used as additives for cementitious compositions, especially those that are used for construction purposes as plasticizer to increase the flowability of the cementitious composition. Especially preferred is the use of the copolymers of the present invention in mortar and cement compositions.

Thus according to a further aspect the present invention refers also to a cementitious composition comprising the copolymer of the present invention. These cementitious compositions for construction purposes like mortar or cement usually comprise a hydraulic binder, aggregate and water. According to a preferred embodiment the copolymer of the present invention is present in these cementitious compositions in an amount of 0.001-2.5, preferably 0.01-0.1 percent based on the weight of the hydraulic binder. Preferably the copolymer of the present invention is added to the cementitious composition in form of an aqueous solution (concentrate) containing the copolymer in a concentration of 5 to 50 weight percent, preferably 15 to 35 weight percent.

The cementitious composition of the present invention may contain other usual additives, for instance aluminum salts like aluminum sulfate, aluminum hydroxide or aluminum hydroxysulfate as accelerators for setting of the concrete. These and other usual additives may be either incorporated into the concentrate of the copolymer of the present invention or may be added directly to the cementitious composition.

Besides the effect or reducing the foam level in the cementitious composition the copolymers of the present invention impart additional advantageous properties to the cementitious compositions. Thus it is known that defoamers can be added to solutions of the non-modified polymers of the prior art to reduce the high foam level of these solutions. However, all known defoaming systems tested so far separate from the aqueous polymer solution in a couple of days and thus their performance is lost and the solutions exhibit the high initial foam level again. Surprisingly it has been found that if defoamers are added to the aqueous solutions/dispersions the copolymers of the present invention they do not separate even after a prolonged period of time.

Furthermore it has been found that the modified copolymers according to the present invention exhibit a better compatibility with common types of plasticizers, such as lignosulfonates and superplasticizers, i.e. naphthalene-formaldehyde-copolymers, compared with the non-modified polymers. The latter form with lignosulfonates in many cases insoluble side-products which precipitate from solutions, in particular if tributylphosphate has been added as a defoamer into the lignosulfonates.

Due to these additional advantageous properties of the copolymers of the present invention cementitious compositions can be easily adapted to the needs of a specific customer by addition of other additives, like defoamers or additional plasticizers without having problems with compatibility.

The following Examples are provided to illustrate the present invention in more detail:

### Example 1

A polymer resin according to the invention composed of 0.5096 moles of styrenic structural units (a) and 0.4962 moles of maleic acid structural units (b) and 0.0038 moles of a half-ester prepared from maleic anhydride and Synalox 100-150B (c) was prepared as follows. Synalox 100-150B is a polypropyleneoxide prepared from propyleneoxide with butanol and has a molecular weight of 2,600. 20 g of maleic anhydride were reacted with 10 g Synalox 100-150B at 140°C for one hour. The solution was allowed to cool to 80°C and another 19 g of maleic anhydride were added. Then, 50 g of water were added and the solution was stirred at 80°C for another hour. 100 g isopropanol and 0.1 g of dedecylmercaptane were added and the solution was heated to 82°C. 52g styrene and a solution of sodium peroxodisulfate in water was continuously, but separately added over the course of one hour at 82°C. The reaction mixture was stirred for another hour at this temperature. Isopropanol was evaporated and 100 ml water were added. The solution was allowed to cool to 65°C. The reaction mixture was neutralized with aqueous caustic and adjusted to a pH of 7.2 and was diluted with water to a non-volatile content of 30 wt.-%. The Brookfield-viscosity of the solution was 170 cps (25°C). Hence the molar ratio of units a/ units b+c was 1:1 and the molar ratio of units b/units c was 130:1 for this copolymer.

3.1 g of this solution was added to a mixture of 450 g of ordinary Portland Cement CEM and 1,350 g of CEM Normsand (0.2 mm) and 198 g water. Hence the water/cement ratio was 0.44. An excellent plastization of the mortar mixture was observed. The mortar air content as determined in accordance with DIN EN 196 was 4.8 %.

According to DIN EN 196 flowability was measured by compacting fresh mortar in the upside-down funnel of the apparatus and placed on the glass plate. The funnel was removed and the apparatus turned on. The glass plate moved 15 times up and down in a defined distance in brusque movements. The diameter of the mortar cake after the strokes was then recorded. The initial diameter was 100 mm, i.e. the larger diameter of the funnel. Final diameters above 100 mm demonstrate the mortar exhibits a certain flowability The extension (flow) of the mortar mixture was measured to be 162 mm (after 10 min) and 158 mm (after 30 min) according to this DIN norm.

When 1.5 wt.-% tributylphosphate was added to the 30 wt.-% polymer solution the mortar air content is 5 % and its flow is slightly reduced to 150 mm (after 10 min) and 148 mm (after 30 min). But the tributylphosphate does not separate from the aqueous solution.

### Comparative Example 1a

A polymer prepared in accordance with the procedure described for example 1 with the exception that it has not been modified according to the present invention and consists of 0.5 mole-% styrenic structural units and 0.5 mole-% maleic acid structural units was solubilized in caustic and adjusted to pH of 7.2. The polymer had a molecular weight of 7,800 and was diluted with water to 30 wt.-% its Brookfield-viscosity is 70 cps (25°C).

3.1 g of this solution were added to the mortar mixture and its properties measured as described in Example 1. The mortar air content was determined to be 18 %. Its flow was 160 mm (after 10 min) and 155 mm (after 30 min).

A comparison with Example 1 shows that only the modified polymer according to the present invention results in a low air entrainment in mortar.

When 1.5 wt.-% Synalox 100-150B was post-added to the unmodified styrene carboxylic acid salt copolymer a mortar air content of 6.8 % is obtained. The post-added defoamer Synalox 100-150B separated almost completely after 2 days standing into an upper phase. This shows that only the incorporation of the defoamer into the polymer backbone according to the invention results in a stable dispersion and surprisingly the air entrainment in mortar is even lower when the defoamer is incorporated into the polymer backbone in comparison to a composition where the defoamer is added separately.

### Comparative Example 1b

A polymer composed of 0.5 mole-% styrenic structural units (a), 0.45 mole-% maleic acid structural units (b), and 0.05 mole-% of a half-ester of maleic anhydride with octanol (c) prepared similar to the procedure as described for example 1 was converted with aqueous caustic into its salt form and adjusted to pH of 7.3. The solution was further diluted with water to a non-volatile content of 30 wt.-%. The Brookfield-viscosity was 162 cps (25°C). Hence, the molar ratio of units a/units b+c is 1:1 and the molar ratio of units b/units c is 9.

3.1 g of this solution was added into a mortar mixture as described in example 1. The mortar air content measured according to DIN EN 196 was determined to be 13%.

### Example 2

Dow Fine 1000 ( a defoamer produced and offered by Dow Chemical Company made from propyleneoxide with a mixture of higher aliphatic alcohols (C₁₂-C₁₄) was added to the aqueous solution of example 1 so that the weight concentration of Dow Fine 1000 in the polymer solution was 0.5%. The dispersion remained stable without any separation of the defoamer. 3.1 g of this polymer dispersion was added to the mortar mixture and its properties were determined as described in Example 1. The mortar air content was measured to be 4.1 % and its flow was 161 mm (after 10 min.) and 157 mm (after 30 min).

This example shows that Dow Fine 1000 remained stable in the dispersion and can additionally reduce the foam level.

### Comparative Example 2a

0.5 wt% Dow Fine 1000 was added to the polymer solution prepared as described in Comparative Example 1a (unmodified polymer) A dispersion is obtained which is however only stable for 1 day and saparated into 2 layers. Dow Fine 1000 is in the upper layer.

### Comparative Example 2b

Comparative Example 2a was repeated with the exception that instead of Dow Fine 1000, tributylphosphate (1.5 wt%) was used as a post-added defoamer. The dispersion seperated agfter 1 day standing into 2 layers, the upper layer containing the tributylphosphate.

Comparative examples 2a and 2b show that the unmodified copolymers can not be blended with post-added defoamers

### Example 3

Blendability with lignosulfonates.

25 ml of the aqueous 30 wt.-% polymer solution of Example 1 containing 1.5 wt.-% tributylphosphate was blended with 25 ml of a 40 wt.-% sodiumlignosulfonate solution and stirred for half an hour. The blend remained stable with no precipitates and agglomerations.

### Comparative Example 3

25 ml of the aqueous polymer solution of styrene/maleic acid of Comparative Example 1a were blended with 25 ml of a 40 wt.-% sodiumlignosulfonate solution and (1.5 wt.-%) tributylphosphate was added. The mixture was stirred for half an hour. After one day standing an agglomeration was observed.

This example shows that the polymer solution of the present invention can be blended with common plasticizers such as lignosulfonates.

### Example 4

The example 1 was repeated whereby Synalox 100-150B was replaced by 10g of Dow Fine 1000 (produced from a C₁₀ -C₁₂ fattyalcohol and propyleneoxide, molecular weight of 1000) resulting in a polymer composed of 50 mole-% styrenic structural units (a), 49 mole-% of maleic acid structural units (b), and 1 mole-% of structural units of a half ester of maleic anhydride with Dow Fine 1000 having a ratio of units a/units b+c of 0.96 and units b/ units c of 49. This copolymer was converted into its salt form by treatment with aqueous caustic and adjusted to a pH of 7.2. The dispersion was diluted with water to a 30 wt.-% aqueous solution. The Brookfield-viscosity at 25°C was 90 cps. The mortar was produced and the air content and flow was measured in accordance with the procedure as described for Example 1. The air content in mortar was determined to be 4.3 %, flow after 10 minutes was 152 mm and the flow after 30 minutes was 150 mm.

### Example 4a

A 1:1 blend of the dispersion of Example 4 with a 40 wt.-% sodiumlignosulfonate solution tested in accordance with the procedure described for Example 1 resulted in a mortar air content of 4.6 %, a flow after 10 minutes of 154 mm, and after 30 minutes of 148 mm. The dispersion is stable and does not separate.

### Comparative Example 4a

A polymer containing a half-ester of maleic anhydride with hydrophilic polyethylenglycol blocks was prepared as follows:

26.13 g of maleic anhydride were dissolved in 60 g Dow MPEG polyglycol 500 (prepared from methanol and ethylene oxide having a molecular eight of 500) and heated to 40°C. 1.17 g of azodiisobutyronitrile were added and dissolved (solution A).

1.7 g of maleic anhydride were added to 60 g polyglycol MPEG 500 and heated to 100°C. Solution A and a solution of 26.6 g styrene (solution B) were dropped into the reaction mixture at 100°C within 1 hour. The reaction solution was allowed to react further for one hour. Additional 0.12 g of azo-initiator was added and the solution stirred for another hour at 100°C. Then the temperature was raised to 140°C and kept for 2 hours. Then 235 g of water were added and the reaction mixture was cooled to 60°C, followed by the addition of 30 g of a 30 wt.-% caustic solution, resulting in a pH of 8. 5. The Brookfield-viscosity of the resultant product was 106 cps at 25°C, and the non-volatiles content was 39.4%.

3 wt.-% of antifoam package Mossex 904 SE, a silicon from Protex and the Henkel Dehydran 240 in a weight ratio of 1:1 was added. The air content as determined in accordance with the procedure of Example 1 in mortar was 9.1%.

Comparison with the examples of the invention show that a polymer derived of a half-ester of maleic anhydride with polyethyleneoxideglycol results in an undesired, much higher mortar air level.

### Comparative Example 4b

This comparative example shows the effect of the ratio of structural units b) to structural units c) on the utility of the copolymer as a cement plasticizer.

A hydrophobic polyalkyleneoxide (Synalox 100-150B) was used as a solvent and reaction medium at the same time. 26.13 g of maleic anhydride (0.286 mmoles) were molten at 60°C and 332.8 g of Synalox 100-150B (Mw of 2600, 0.128 mmoles) and 0.6 g dodecylmercaptane are added. 1.2 g of azodiisobutyronitrile were added at 30°C and dissolved in the reaction mixture (solution A).

1.7 g of maleic anhydride (0.0173 mmoles) were added to another 322.8 g of Synalox 100-150B (0.128 mmoles) and heated to 100°C. Solution A and 26.6 g of styrene (solution B9 are dropped into the reaction mixture at 100°C within 1 hour. A white dispersion was obtained. Additional 0.12 g of azodiisobutyronitrile were added and the solution is stirred for another hour at 100°C. Than the temperature was kept for one hour at 140°C resulting in a copolymer with a ratio of structural units b) to structural units c) of 1:5.4 (under the assumption that al hydroxy groups of the Synalox had reacted with maleic anhydride under the reaction conditions applied.

235g of water were added and the solution was allowed to cool to 65°C. Then 28.5 g of a 30 wt% aqueous caustic solution is slowly added to adjust the pH to 7.2. When the solution cooled to room-temperature, the white dispersion solidified completely into a white precipitation (thick, white and large lumps). The precipitation cannot be redissolved/redispersed when the pH is raised to 10. Still a solid paste was obtained when the solution was further diluted to a non-volatile content of 36%.

The example shows that when in a copolymer as disclosed in DE-A 4142388 having a ratio of non-modified maleic acid units to half-ester units within the range claimed in this reference a hydrophobic polyalkyleneoxide instead of an hydrophilic one is selected, the polymer is neither soluble nor water-dispersible any more and, therefore, cannot be used as a cement plastifier.

### Example 5

1.4 ml of glycidylmethacrylate (GMA) was added to 10g of Dowfine 1000. The mixture was heated to 120°C. After 20 minutes, the reaction mixture became turbid indicating the desired reaction. The mixture was stirred for another 3 hours at this temperature (solution A).

49 g of maleic anhydride were added to 50 g of water in a separate reactor. This mixture was heated to 80°C for one hour in order to complete the hydrolysis of maleic acid into maleic anhydride. Then, 100 g of isopropanol, 0.1 g of dodecylmercaptane and the solution A were added in this sequence.

52 g styrene and an aqueous solution of sodiumperoxodisulfate (initiator) were added simultaneously, but separately during the course of one hour at 83°C. Then, 100 ml of water were added and the mixture is subjected to a water-steam distillation. Isopropanol was removed. The mixture was allowed to cool to 60°C and the precipitated polymer was dissolved by adding a caustic solution. The pH was adjusted to a pH of 7 and the solution was diluted with water to a non-volatile content of 30 wt-%. The Brookfield viscosity of the solution was 80 cps (25° C).

Mortar testing: 3.0 g of this solution was added to a mortar mixture of 450g Portland Cement CEM and 1350 g of CEM Normsand and 198 g water. The mortar air content was determined in accordance with example 1 to be 5.0%, its flow was determined in accordance with example 1 to be 170mm (after 10 min). The blank mortar (without the addition of the polymer solution) has an air level of 4.6% and a flow of about 100 to 110 mm.

## Claims

1. A copolymer comprising:
a) structural units derived from ethylenically unsaturated hydrocarbons;
b) structural units derived from ethylenically unsaturated monomers selected from mono-carboxylic acids as well as salts and amids thereof, dicarboxylic acids as well as salts, amids and half-amids thereof and cyclic anhydrides and imids of dicarboxylic acids and mixtures thereof; and
c) structural units derived from monomers selected from esters of ethylenically unsaturated monocarboxylic acids, half-esters of ethylenically unsaturated dicarboxylic acids, allylethers and vinylethers and mixtures thereof having an substituent R linked to the oxygen atom of either the ester groups or the ether groups that is selected from:
(i) polyalkyleneoxide groups corresponding to the formula 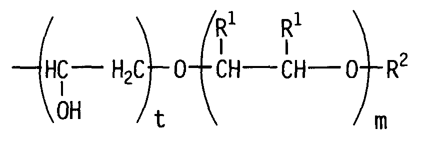 wherein R¹ is independently at each occurrence selected from hydrogen and C₁-C₄ alkyl, R² is C₁-C₄₄ hydrocarbyl, t is 0 or 1 and m is an integer in the range of 5 - 200, with the proviso that if R² is C₁-C₅ alkyl the polyalkyleneoxide group does not contain more than 50 wt. % ethyleneoxide moieties based on the weight of the polyalkyleneoxide group; and
(ii) groups corresponding to the formula 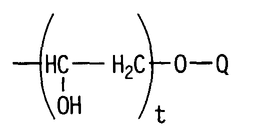 wherein t is 0 or 1 and Q is a polysiloxane residue; and
whereby the molar ratio of units b) to units c) in the copolymer is in the range of 1000:1 to 5:1.

2. The copolymer of claim 1, wherein
the structural units a) correspond to the formula 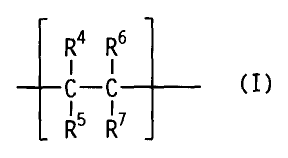
wherein R⁴ is selected from C₁-C₈ alkyl and substituted and non-substituted aryl and R⁵, R⁶ and R⁷ are independently at each occurrence selected from hydrogen and C₁-C₄ alkyl;
the structural units b) correspond to the formulae 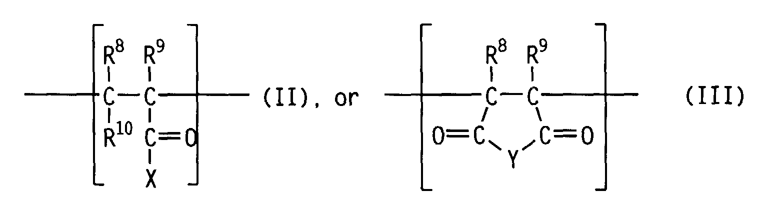
wherein R⁸ and R⁹ are independently at each occurrence selected from hydrogen and C₁-C₄ alkyl;
R¹⁰ is selected from hydrogen and C(O)X;
X is independently at each occurrence selected from OA and NR¹¹₂,
whereby A is selected from hydrogen, ammonium, alkyl ammonium, alkanol ammonium and 1/n Mⁿ⁺, whereby M is a metal having the valence n, and R¹¹ is selected from hydrogen, alkyl and aryl;
and Y is selected from O and NR¹¹, whereby R¹¹ is defined as above; and the structural units c) correspond to the formulae 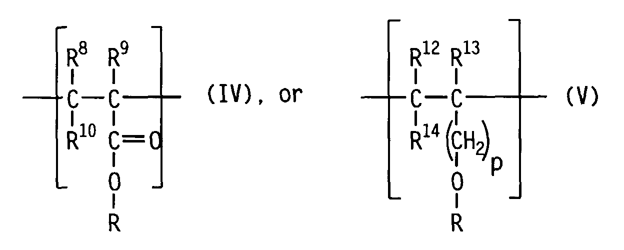
whereby R, R⁸, R⁹ and R¹⁰ are defined as in claim 1 and
R¹², R¹³ and R¹⁴ are independently at each occurrence selected from hydrogen and C₁-C₄ alkyl and p is an integer of 0 or 1.

3. The copolymer of any of the preceding claims, wherein the structural units a) are derived from monomers selected from styrene and diisobutylene.

4. The copolymer of any of the preceding claims, wherein the structural units b) are derived from monomers selected from (meth)acrylic acid and salts and amids thereof, maleic acid and salts, amids and half amids thereof, maleic anhydride and maleinimide.

5. The copolymer of any of the preceding claims, wherein the structural units c) are derived from monomers selected from 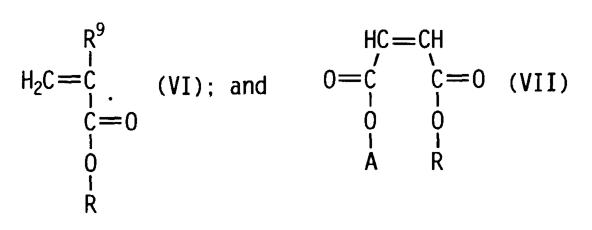
wherein R⁷ is hydrogen or methyl and A and R are as defined above.

6. The copolymer of any of the preceding claims, wherein R is selected from
(i) ethyleneoxide/propylenenoxide copolymer residues bearing a terminal C₁-C₂₄ alkyl group and containing no more than 50 wt% ethyleneoxid units based on the weight of R,
(ii) polyethyleneoxide residues bearing a terminal C₆-C₃₅ alkyl moiety containing on an average not more than 10 ethyleneoxide units,
(iii) poly(propyleneoxide) residues bearing a terminal C₁-C₂₄ alkyl group,
(iv) poly(butyleneoxide) residues bearing a terminal C₁-C₂₄ alkyl group,
(v). butyleneoxide/propyleneoxide copolymer residues bearing a terminal C₁-C₂₄ alkyl group,
(vi) ethyleneoxide/butyleneoxide copolymer residues bearing a terminal C₁-C₂₄ alkyl group and containing no more than 50 wt% ethyleneoxid units based on the weight of R,
(vii) ethyleneoxide/propyleneoxid/butyleneoxide terpolymer residues bearing a terminal C₁-C₂₄ alkyl group and containing no more than 50 wt% ethyleneoxid units based on the weight of R, and
(viii) polymer residues corresponding to the formula 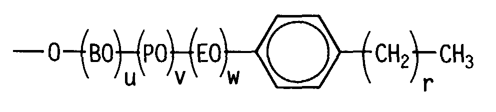 wherein EO, PO, BO represent randomly arranged ethyleneoxide, propyleneoxide and butyleneoxide units respectively, u, v, and w are integers of 0 to X, with the proviso, that no more than 50 wt% ethyleneoxide units based on the weight of R are present and r is 0-35.

7. The copolymer of any of claims 1-5 wherein the polysiloxane residue Q of substituent R(ii) corresponds to the formula 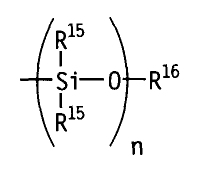
wherein R¹⁵ is independently at each occurrence selected from C₁-C₆ alkyl, preferably methyl, R¹⁶ is selected from R¹⁵ and SiR¹⁵₃, t is 0 or 1 and n is an integer between 10 and 100.

8. The copolymer of any of the preceding claims, wherein R has a weight average molecular weight of 100 - 10,000, preferably of 500 -5,000.

9. The copolymer of any of the preceding claims, wherein the molar ratio of units a) to the sum of units b) and c) is in the range of 1:10 to 10:1.

10. The copolymer of any of the preceding claims, wherein the molar ratio of units b) to units c) is in the range of 500:1 to 10:1, preferably in the range of 150:1 to 20:1.

11. The copolymer of any of the preceding claims, wherein the weight average molecular weight of the copolymer is 500 - 100,000 preferably 1,000 - 30,000 most preferably 2,000 - 20,000.

12. Use of the copolymer as defined in any of the preceding claims as plasticizer in a cementitious composition especially for construction purposes.

13. A cementitious composition comprising a copolymer as defined in any of the claims 1 -11.

14. The composition of claim 13 comprising a hydraulic binder, aggregate and water.

15. The composition of claim 14 wherein the copolymer is present in an amount of 0.001-2.5, preferably 0.01-0.1 percent based on the weight of the total composition.
